# EUROPEAN PATENT APPLICATION

(11) **EP 4 123 606 A1**
(43) Date of publication of application: **25.01.2023**
(21) Application number: 21772033.3
(22) Date of filing: 15.01.2021
(51) Int. Cl.: G07C 5/00

(54) **DRIVE RECORDER, DATA RECORDING METHOD, AND PROGRAM**

(30) Priority: 16.03.2020 JP 2020045246
(71) Applicant: JVCKenwood Corporation, Yokohama-shi, Kanagawa 2210022 (JP)
(72) Inventor: AGATA, Toshihiro, Yokohama-shi Kanagawa 221-0022 (JP)
(74) Representative: Wimmer, Hubert
(86) International application number: PCT/JP2021/001255
(87) International publication number: WO 2021/186869

(57) **Abstract**

A drive recorder 10 is mounted on a back door 52 of a vehicle 50. The drive recorder 10 includes: an abnormality detection unit that detects an abnormality related to the vehicle 50; an open or closed door detection unit that detects that the back door 52 is open or closed; an event detection unit that detects an event based on a result of detection by the abnormality detection unit and a result of the open or closed door detection unit; and a recording control unit that records event data in response to a detection of the event.

## Description

### [TECHNICAL FIELD]

The present invention relates to a drive recorder, a data recording method, and a program.

### [BACKGROUND ART]

In recent years, drive recorders for capturing and recording images around a vehicle have been popularly used. A drive recorder is triggered by a value detected by an acceleration sensor being in excess of a predetermined threshold value to record various data acquired for several seconds before and after the detection of a trigger as event data (see, for example, patent literature 1).

[Patent Literature 1] JP2019-212110

### [SUMMARY OF INVENTION]

### [TECHNICAL PROBLEM]

In the case of rear drive recorders for capturing and recording images behind a vehicle, the drive recorder is mounted on the back door of the vehicle in some cases. In this case, event data may be recorded in response to an impact occurring when the back door is opened or closed. This may result in shortage of the capacity to record event data in response to an impact such as an accident and/or in overwriting of event data recorded in the past.

The present invention addresses the aforementioned issue, and a purpose thereof is to provide a technology for preventing unnecessary event data from being recorded when the back door is opened or closed.

### [SOLUTION TO PROBLEM]

An embodiment of the present invention relates to a drive recorder mounted on a back door of a vehicle, including: an abnormality detection unit that detects an abnormality related to the vehicle; an open or closed door detection unit that detects that the back door is open or closed; an event detection unit that detects an event based on a result of detection by the abnormality detection unit and a result of detection by the open or closed door detection unit; and a recording control unit that records event data in response to a detection of the event.

Another embodiment of the present invention relates to a data recording method. The method includes: detecting an abnormality related to a vehicle; detecting that a back door of the vehicle is open or closed; detecting an event based on a result of detection of an abnormality and a result of detection of the back door being open or closed; and recording event data in response to a detection of the event.

Optional combinations of the aforementioned constituting elements, and mutual substitution of constituting elements and implementations of the present invention between methods, apparatuses, systems, etc. may also be practiced as additional modes of the present invention.

### [ADVANTAGEOUS EFFECTS OF INVENTION]

The present invention prevents unnecessary event data from being recorded when the back door is opened or closed.

### [BRIEF DESCRIPTION OF DRAWINGS]

Fig. 1 schematically shows a vehicle in which a drive recorder according to the embodiment is mounted;
Fig. 2 is a block diagram showing a functional configuration of a drive recorder according to the embodiment;
Figs. 3A and 3B are side views schematically showing a method of detecting the attitude of the back door;
Fig. 4 schematically shows an example of detection of the back door being open or closed;
Fig. 5 is a flowchart showing the flow of the data recording method according to the embodiment;
Fig. 6 is a flowchart showing the detail of the process of Fig. 5 for updating the open state flag;
Figs. 7A and 7B schematically show a further vehicle on which the drive recorder according to the embodiment is mounted; and
Fig. 8 is a flowchart showing the detail of the process of Fig. 5 for updating the open state flag.

### [DESCRIPTION OF EMBODIMENTS]

A description will be given of embodiments of the present invention with reference to the drawings. Specific numerical values are shown in the embodiments by way of example only to facilitate the understanding of the invention and should not be construed as limiting the scope of the invention unless specifically indicated as such. Elements not directly relevant to the invention are omitted from the illustration.

### (First embodiment)

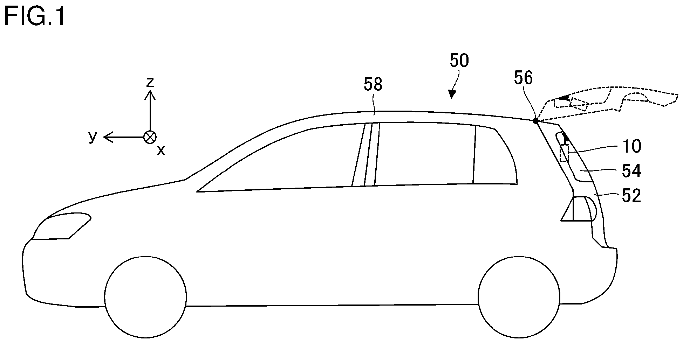

Fig. 1 schematically shows a vehicle 50 in which a drive recorder 10 according to the embodiment is mounted. The drive recorder 10 is mounted on a back door 52 of the vehicle 50 and is configured to capture and record an image behind the vehicle 50. The drive recorder 10 is, for example, mounted in the vehicle cabin of the vehicle 50 and captures an image behind the vehicle 50 across a back window 54 of the vehicle 50. The vehicle 50 is a so-called hatchback car and is configured such that the back door 52 springs upward to open. Fig. 1 shows the back door 52 in the open state by broken lines. The back door 52 is configured to open or close by being rotated around an axis of rotation embodied by a hinge 56 provided in the upper part of the vehicle 50.

Fig. 1 shows a coordinate system defined with reference to the vehicle 50. The vertical direction of the vehicle 50 is defined as the z axis, the longitudinal direction of the vehicle 50 is defined as the y axis, and the transversal direction of the vehicle 50 is defined as the x axis. Referring to Fig. 1, the axis of rotation of the back door 52 is oriented in the transversal direction (x axis) of the vehicle 50.

The drive recorder 10 is provided with, for example, an acceleration sensor as a sensor for detecting an abnormality in the vehicle 50. When the acceleration sensor detects an impact, it is determined that a certain abnormality has occurred in the vehicle 50, and an image capturing a scene behind the vehicle is recorded as event data. The drive recorder 10 is fixed to the back door 52 and so is displaced with respect to a vehicle main body 58 along with the back door 52 when the back door 52 is open or closed. When one attempts to slam shut the back door 52, therefore, an impact occurring when the back door 52 is closed may be detected as an abnormality in the vehicle 50, and the drive recorder 10 may record event data. This is addressed by this embodiment by detecting that the back door 52 is open or closed and preventing event data from being recorded in response to an impact produced when the back door 52 is open or closed.

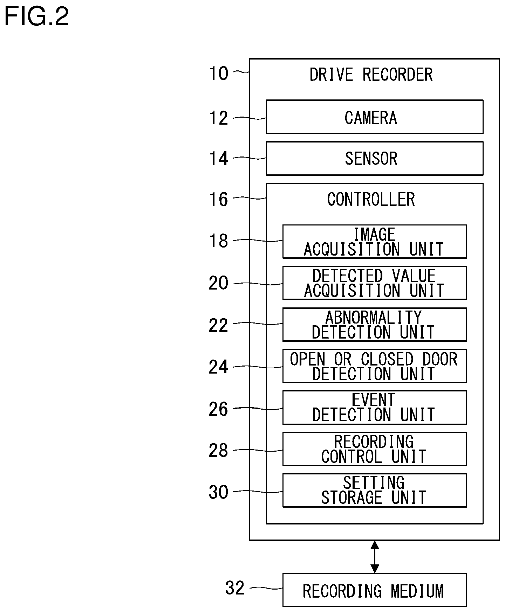

Fig. 2 is a block diagram showing a functional configuration of a drive recorder 10 according to the embodiment. The functional blocks depicted are implemented in hardware such as devices and mechanical apparatus exemplified by a CPU and a memory of a computer, and in software such as a computer program. Fig. 2 depicts functional blocks implemented by the cooperation of these elements. Therefore, it will be understood by those skilled in the art that these functional blocks may be implemented in a variety of manners by a combination of hardware and software.

The drive recorder 10 comprises a camera 12, a sensor 14, and a controller 16. The controller 16 comprises an image acquisition unit 18, a detected value acquisition unit 20, an abnormality detection unit 22, an open or closed door detection unit 24, an event detection unit 26, and a recording control unit 28. The drive recorder 10 may comprises a setting storage unit 30.

The camera 12 has, for example, an imaging element such as a CCD sensor or a CMOS sensor and has an optical element such as a lens for forming an image on the imaging element. The imaging direction of the camera 12 is adjusted such that the camera 12 captures an image of a scene directly behind the vehicle when the back door 52 is in the closed state. In other words, the -y direction in Fig. 1 represents the imaging direction of the camera 12 while the back door 52 is in the closed state. The camera 12 is configured to, for example, capture moving images continuously while the drive recorder 10 is in operation.

The camera 12 may be configured to capture a still image.

The sensor 14 includes an acceleration sensor for detecting the acceleration applied to the drive recorder 10. The acceleration sensor is configured to be able to detect the acceleration in three axes, namely, the X axis, the Y axis, and the Z axis. The axes of detection by the acceleration sensor (X axis, Y axis, and Z axis) define a coordinate system with reference to the drive recorder 10, which coordinate system differs from the coordinate system shown in Fig. 1 with reference to the vehicle 50. The coordinate system of the acceleration sensor is rotated with respect to the coordinate system of the vehicle 50 as the back door 52 is rotated around the hinge 56. The X axis of the coordinate system of the acceleration sensor corresponds to the axis of rotation of the back door 52, the Y axis corresponds to the circumferential direction in the rotation of the back door 52, and the Z axis corresponds to the radial direction in the rotation of the back door 52.

The method of defining the coordinate system of the acceleration sensor is arbitrary. For example, the coordinate system may be defined with reference to the imaging direction of the camera 12 such that the imaging direction of the camera 12 is the Y axis, the vertical direction in the angular field of the camera 12 is the Z axis, and the transversal direction in the angular field of the camera 12 is the X axis. When the coordinate system is defined as described above, the coordinate system with reference to the vehicle 50 and the coordinate system with reference to the acceleration sensor match.

The sensor 14 may include a sensor different from the acceleration sensor described above. The sensor 14 may include a gyro sensor, a door sensor, a vehicle speed sensor, a handle steering angle sensor, a fuel sensor, a temperature sensor, a microphone, a radar sensor, Light Detection and Ranging (LiDAR) sensor, a location information sensor (e.g., GNSS; Global Navigation Satellite System), etc. The drive recorder 10 may acquire information related to the vehicle 50 via a Controller Area Network (CAN), etc. as vehicle information. For example, the drive recorder 10 may acquire information such as an open or closed door, vehicle speed, steering angle, accelerator position, brake position, and location information of the vehicle 50.

The image acquisition unit 18 acquires image data captured by the camera 12. The detected value acquisition unit 20 acquires at least one of the detected values detected by the sensor 14. The detected value acquisition unit 20 acquires, for example, values of acceleration in the X axis, Y axis, and Z axis detected by the acceleration sensor included in the sensor 14.

The abnormality detection unit 22 detects an abnormality related to the vehicle 50 based on at least one detected value acquired by the detected value acquisition unit 20. The abnormality detection unit 22 detects whether an impact is applied to the drive recorder 10 based on, for example, the value of acceleration acquired by the detected value acquisition unit 20. For example, the abnormality detection unit 22 detects an impact when the peak value of acceleration is equal to or greater than a predetermined threshold value, when the time integrated value of acceleration is equal to or greater than a predetermined threshold value, when the duration of time in which the acceleration remains equal to or greater than a predetermined value is equal to or greater than a predetermined threshold value, etc.

The abnormality detection unit 22 may not be bounded by the detection of an impact based on the acceleration and may detect an abnormality of the vehicle 50 based on other information. The impact detection unit 22 may detect an approach of another vehicle or a collision based on an image from the camera 12 acquired by the image acquisition unit 18 by using an image recognition technology. The impact detection unit 22 may detect an abnormal sound or a collision sound based on the detected value acquired by the detected value acquisition unit 20 by using a sound analysis technology. The impact detection unit 22 may detect abnormal traveling of the vehicle 50 or abnormal heat dissipation in respective parts of the vehicle 50 based on the vehicle information acquired via the CAN, etc.

The open or closed door detection unit 24 detects that the back door 52, in which the drive recorder 10 is mounted, is open or closed, based on at least one detected value acquired by the detected value acquisition unit 20. The open or closed door detection unit 24 determines whether the back door 52 is in a stationary state or a dynamic state based on the detected value of the acceleration sensor and, when a stationary state is identified, detects the attitude of the back door 52. The open or closed door detection unit 24 determines whether the back door 52 is in the open state or the closed state based on the result of detection of the attitude of the back door 52.

"Stationary state" refers to a state in which the vehicle 50 is not accelerating or decelerating and the position of the back door 52 relative to the vehicle main body 58 remains unchanged. "Dynamic state" refers to a state other than the stationary state and includes a state in which the vehicle 50 is accelerating or decelerating, a state in which the vehicle 50 is at a stop and the position of the back door 52 relative to the vehicle main body 58 is changing, i.e., the back door 52 is being opened or closed, etc.

When the back door 52 is in a stationary state, the acceleration sensor included in the sensor 14 is also stationary, and so the acceleration sensor detects only the gravitational acceleration. Therefore, it can be determined that the back door 52 is in a stationary state if the detected value of acceleration is comprised only of the gravitational acceleration. The open or closed door detection unit 24 determines that the back door 52 is in a stationary state when, for example, the square-root of sum of squares of the acceleration a_{X}, a_{Y}, and a_{Z} in the three axes of the acceleration sensor (i.e., √(a_{X}²+a_{Y}²+a_{Z}²)) matches the gravitation acceleration (i.e., 1 [G]). The open or closed door detection unit 24 may determine that the back door 52 is in a stationary state when the difference between the square-root of sum of squares of the acceleration in the three axes of the acceleration sensor and the gravitational acceleration is smaller than a predetermined value (e.g., smaller than 0.05 [G]). When the difference between the square-root of sum of squares of the acceleration in the three axes of the acceleration sensor and the gravitational acceleration is equal to or greater than the predetermined value, on the other hand, the open or closed door detection unit 24 determines that the back door 52 is in a dynamic state. The open or closed door detection unit 24 may detect a dynamic state in which the back door 52 is activated in the opening or closing (i.e., rotational) direction, based on at least one of the detected values from the sensor 14 detected in the circumferential direction (Y axis) and the radial direction (Z axis) perpendicular to the axis of rotation around which the back door 52 is opened or closed.

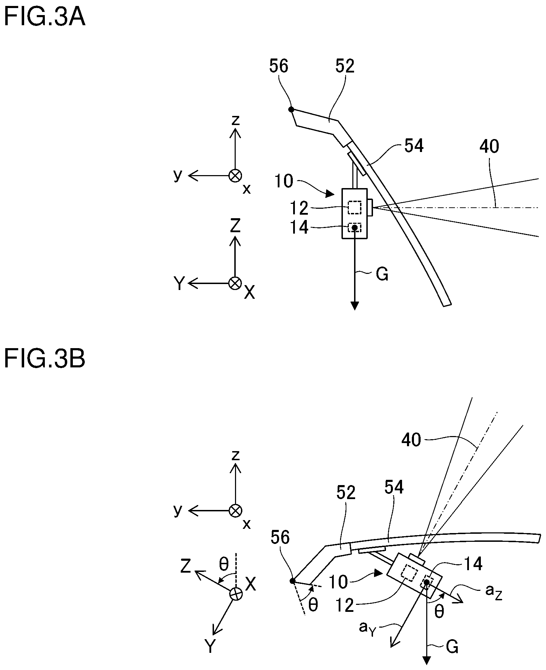

Figs. 3A and 3B are side views schematically showing a method of detecting the attitude of the back door 52. When the open or closed door detection unit 24 determines that the back door 52 is in a stationary state, the open or closed door detection unit 24 detects the attitude of the back door 52 based on the value of acceleration acquired. The open or closed door detection unit 24 detects the attitude of the back door 52 by identifying the direction of gravitational acceleration in the coordinate system with reference to the sensor 14.

Fig. 3A shows the back door 52 in the closed state and shows an example in which the first coordinate system (x, y, z) with reference to the vehicle 50 matches the second coordinate system (X, Y, Z) with reference to the sensor 14. The gravitational acceleration G is aligned with the -z direction in the first coordinate system and so is also aligned with the -Z direction in the second coordinate system. Therefore, the acceleration detected by the sensor 14 is comprised of the acceleration a_{Z} = -1 [G] in the Z axis, and the acceleration in the X axis and the Y axis is 0.

Fig. 3B shows the back door 52 in the open state and shows a state in which the back door 52 is rotated by an angle θ from the closed state shown in Fig. 3A and has sprung upward. The gravitational acceleration G remains aligned with the -z direction in the first coordinate system, maintaining the state shown in Fig. 3A. Meanwhile, the second coordinate system (X, Y, Z) with reference to the sensor 14 is rotated by an angle θ with respect to the first coordinate system (x, y, z) with reference to the vehicle 50. Therefore, the acceleration detected by the sensor 14 is comprised of the acceleration a_{Y} = -sinθ [G] in the Y axis direction and the acceleration a_{Z} = -cosθ [G] in the Z axis when the back door 52 is in a stationary state. Therefore, the angle θ can be calculated and the attitude of the back door 52 can be detected from at least one of the detected values of the acceleration a_{Y}, az in the Y axis and the Z axis, by using at least one of the expression a_{Y} = -sinθ and the expression a_{Z} = -cosθ.

When the open or closed door detection unit 24 determines that the back door 52 is in a stationary state, the open or closed door detection unit 24 calculates a value (e.g., the angle θ) indicating the attitude of the back door 52. The open or closed door detection unit 24 determines that the back door 52 is in the closed state when the angle indicating the attitude of the back door 52 is a predetermined value (e.g., the initial value of 0 degree) predefined for each vehicle or is within a predetermined range (e.g., within ±5 degrees with respect to the initial value). The open or closed door detection unit 24 determines that the back door 52 is in the open state when the angle indicating the attitude of the back door 52 is different from a predetermined value (e.g., the initial value of 0 degree) or exceeds a predetermined range (e.g., within ±5 degrees with respect to the initial value). The open or closed door detection unit 24 may determine that the back door 52 is in the open state only when the angle indicating the attitude of the back door 52 is included in the range of rotation around the hinge 56. When the angle indicating the attitude of the back door 52 is outside the range of rotation around the hinge 56, the open or closed door detection unit 24 may output an error.

The open or closed door detection unit 24 updates "an open state flag" indicating that the back door 52 is in the open state based on the result of detection of the attitude in the stationary state of the back door 52. The open state flag is set to ON when the back door 52 is in a stationary state and in the open state. The open state flag is set to OFF when the back door 52 is in a stationary state and in the closed state.

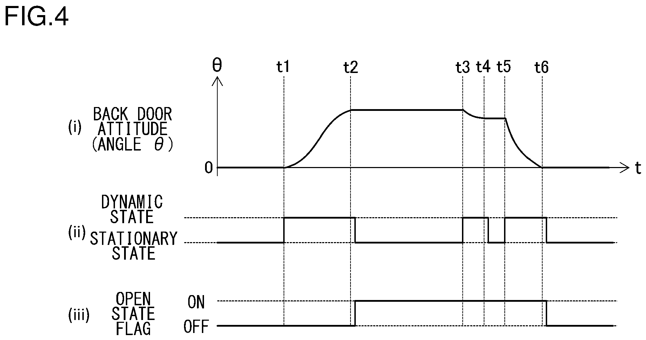

Fig. 4 schematically shows an example of detection of the back door 52 being open or closed and schematically shows the operation of the open or closed door detection unit 24 in the case the attitude (the angle θ) of the back door 52 changes with time. The top graph (i) shows a time-dependent change in the attitude (the angle θ) of the back door 52. The back door 52 is in the closed state (θ=0) until time t1. During time t1-t2, the back door 52 is rotated in the opening direction, and the angle θ is increased. During time t2-t3, the back door 52 remains in the open state, and the angle θ remains a constant value. During time t3-t4, the back door 52 is rotated in the closing direction, and the angle θ is decreased slightly. During time t4-t5, the open state is maintained. Time t3-t5 is a period in which a preparatory action such as holding the back door 52 to close the back door 52 is performed. Thereafter, during time t5-t6, the back door 52 is rotated in the closing direction, and the angle θ is decreased. At time t6, the back door 52 is in a completely closed state. Subsequently, after time t6, the closed state of the back door 52 is maintained. In a time sequence like this, it is assumed that an impact is generated by the back door 52 colliding heavily with the vehicle main body 58 at time t6.

The middle graph (ii) of Fig. 4 shows how the open or closed door detection unit 24 determines a stationary state or a dynamic state. When the attitude of the back door 52 is maintained, the open or closed door detection unit 24 determines that the back door 52 is in a stationary state. When the attitude of the back door 52 is changing, the open or closed door detection unit 24 determines that the back door 52 is in a dynamic state. In the illustrated example, the open or closed door detection unit 24 determines that the back door 52 is in a dynamic state in the periods t1-t2, t3-t4, and t5-t6. At a point of time immediately after the attitude of the back door 52 is maintained, the back door 52 may be slightly swinging so that a certain delay may be created since the points of time t2, t4, t6, when the attitude of the back door 52 is fixed, until a determination of a stationary state is made.

The bottom graph (iii) of Fig. 4 shows the open state flag maintained by the open or closed door detection unit 24. Until time t1, the back door 52 is in the closed state so that the open state flag is set to OFF. Subsequently, when the back door 52 is placed in a dynamic state during time t1-t2, the attitude of the back door 52 is not detected, and the open state flag is maintained OFF. When the back door 52 is placed in a stationary state and the open state is sensed as a result of detection of the attitude of the back door 52 past time t2, the open state flag is updated to ON. Subsequently, when the back door 52 is placed in a dynamic state during time t3-t4, the attitude of the back door 52 is not detected, and the open state flag is maintained ON. Past time t4, the back door 52 is placed in a stationary state. The open state is sensed as a result of detection of the attitude of the back door 52, and the open state flag is maintained ON and is not updated. Subsequently, the back door 52 is placed in a dynamic state during time t5-t6. Therefore, the attitude of the back door 52 is not detected, and the open state flag is maintained ON. When the back door 52 is placed in a stationary state and the closed state is sensed as a result of detection of the attitude of the back door 52 past time t6, the open state flag is updated from ON to OFF.

Referring back to Fig. 2, the event detection unit 26 detects an event based on the result of detection by the abnormality detection unit 22 and the open or closed door detection unit 24. The term "event" refers to an incident that triggers recording of event data and means the occurrence of an incident such as an accident or collision of a vehicle. In principle, the event detection unit 26 detects an event when the abnormality detection unit 22 detects an abnormality related to the vehicle 50. However, the event detection unit 26 is configured not to detect an event when an abnormality associated with an action to open or close the back door 52 occurs. Stated otherwise, the event detection unit 26 detects an event when the abnormality detection unit 22 detects an abnormality in a situation in which the back door 52 is not being opened or closed.

The event detection unit 26 detects an event based on the open state flag maintained by the open or closed door detection unit 24. The event detection unit 26 is configured to detect an event when an abnormality or an impact is detected while the open state flag is OFF and not to detect an event when an abnormality or an impact is detected while the open state flag is ON. For example, when an abnormality or an impact is detected when the back door 52 is closed at time t6 of Fig. 4, an event is not detected because the flag at time t6 is ON. Meanwhile, when an abnormality or an impact is detected during a period in which the closed state of the back door 52 is maintained and the open state flag is OFF, the event detection unit 26 detects an event. This allows an event to be detected in response to the occurrence of an abnormality related to the vehicle 50 in a situation in which the vehicle 50 is traveling on a road with the back door 52 being closed.

The event detection unit 26 may be configured not to detect an event during a period since a point of time when the open state flag is set to OFF, i.e., a point of time when the back door 52 is closed, until a predetermined time elapses. The event detection unit 26 may be configured not to detect an event when the open or closed door detection unit 24 determines that the back door 52 is in a dynamic state and the back door 52 is in a dynamic state in the radial direction and the circumferential direction (e.g., the Y axis and the Z axis) perpendicular to the axis of rotation around which the back door 52 is opened or closed.

When the event detection unit 26 detects an event, the recording control unit 28 records event data in a recording medium. Image data captured by the camera 12 over a predetermined period of time before and after the point of time of detection of the event is recorded as event data. Information on the abnormality or the value of acceleration that has led to the detection of the event may be recorded in the event data. Arbitrary information related to the traveling of the vehicle 50 at the point of time of detection of the event may be recorded.

The recording control unit 28 records the event data in the recording medium 32, assigning an overwrite-disabled attributed to the event data. The recording control unit 28 may record image data obtained when an event is not detected in the recording medium 32, assigning an overwrite-enabled attribute to the event data. The recording control unit 28 may record image data captured on a continuous basis in the first recording region and record the event data in the second recording region of the recording medium 32 different from the first recording region. The second recording region may be a recording region dedicated to the event data. The first recording region and the second recording region may be independent partitions provided in the recording medium in advance or regions marked by a folder or a file name on a file system.

The setting storage unit 30 stores the setting value used by the open or closed door detection unit 24 to detect that the back door 52 is open or closed. The setting storage unit 30 stores the initial value (e.g., the angle θ) indicating the attitude of the back door 52 occurring when the back door 52 is in the closed state. The initial value indicating the attitude corresponding to the closed state of the back door 52 is stored in the setting storage unit 30 by mounting the drive recorder 10 on the back door 52 and then performing an initial setting operation while the back door 52 is being closed. For example, the angle θ of the back door 52 is calculated based on the detected value of the sensor 14 detected when the initial setting operation is performed, and the angle is stored in the setting storage unit 30 as the initial value. The setting storage unit 30 may store a value indicating the range of rotation of the back door 52. For example, the upper limit of the range of rotation of the back door 52 may be stored in the setting storage unit 30 by performing the initial setting operation when the back door 52 has sprung to the upper limit.

The recording medium 32 is comprised of a flash memory such as an SD card (registered trademark). The recording medium 32 is used by being inserted in a slot provided in the drive recorder 10 and is configured to be removable from the drive recorder 10. The recording medium 32 may be a non-volatile memory such as a flash memory built in the drive recorder 10. The recording medium 32 may be configured as a magnetic storage apparatus such as a hard disk drive.

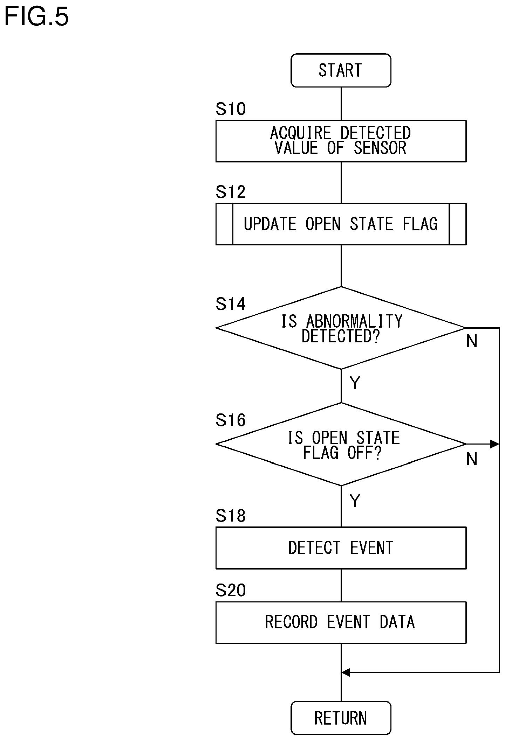

Fig. 5 is a flowchart showing the flow of the data recording method according to the embodiment. The drive recorder 10 acquires the detected value of the sensor 14 (S10) and performs a process for updating the open state flag indicating whether the back door 52 is in the open state, based on the detected value thus acquired (e.g., the detected value of acceleration) (S12). When an abnormality related to the vehicle 50 is detected based on the detected value acquired (e.g., the detected value of acceleration) (Y in S14) and the open state flag is OFF (Y in S16), the drive recorder 10 detects an event (S18) and records the event data (S20). When an abnormality related to the vehicle 50 is not detected (N in S14) or when the open state flag is ON (N in S16), the drive recorder 10 skips the steps of S18 and S20.

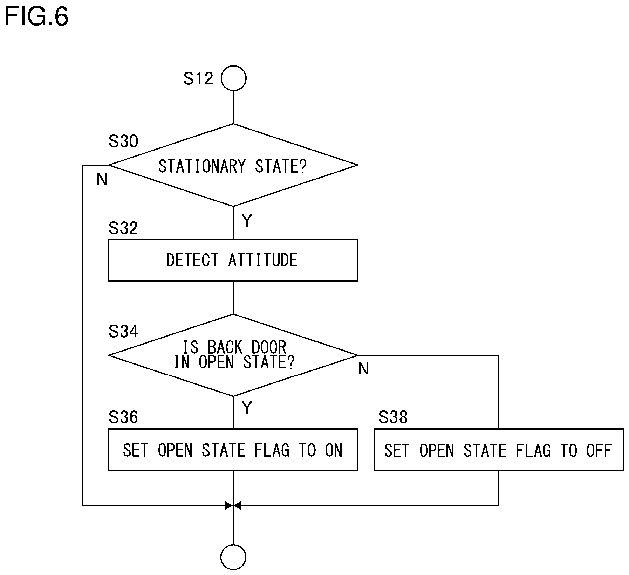

Fig. 6 is a flowchart showing the detail of the process for updating the open state flag (S12). The open or closed door detection unit 24 determines whether the back door 52 is in a stationary state based on the detected value acquired (S30). When the open or closed door detection unit 24 determines that the back door 52 is in a stationary state (Y in S30), the open or closed door detection unit 24 detects the attitude based on the detected value acquired (S32). When the open or closed door detection unit 24 determines that the back door 52 is in the open state based on the result of detection of the attitude (Y in S34), the open or closed door detection unit 24 sets the open state flag to ON (S36). When the open or closed door detection unit 24 determines that the back door 52 is in the closed state in S34 (N in S34), the open or closed door detection unit 24 sets the open state flag to off (S38). When it is determined that the back door 52 is in a dynamic state in S30 (N in S30), the steps S32-S38 are skipped.

The embodiment makes it possible to prevent an event from being detected when an abnormality or an impact occurs as the back door 52 is opened or closed, by detecting that the back door 52 is open or closed in the rear drive recorder 10 mounted on the back door 52. This can prevent event data from being recorded in response to the occurrence of an abnormality or an impact not related to a collision or an accident and can prevent unnecessary event data from being recorded. This can prevent the recording capacity of the recording medium 32 from becoming scarce due to recording of unnecessary event data. It is possible to prevent past event data that should be essentially saved from being overwritten by unnecessary event data. The embodiment also ensures that event data is recorded in response to the occurrence of an abnormality or an impact due to a collision or an accident, by making it possible to detect an event while the back door 52 is being in the closed state.

### (Second embodiment)

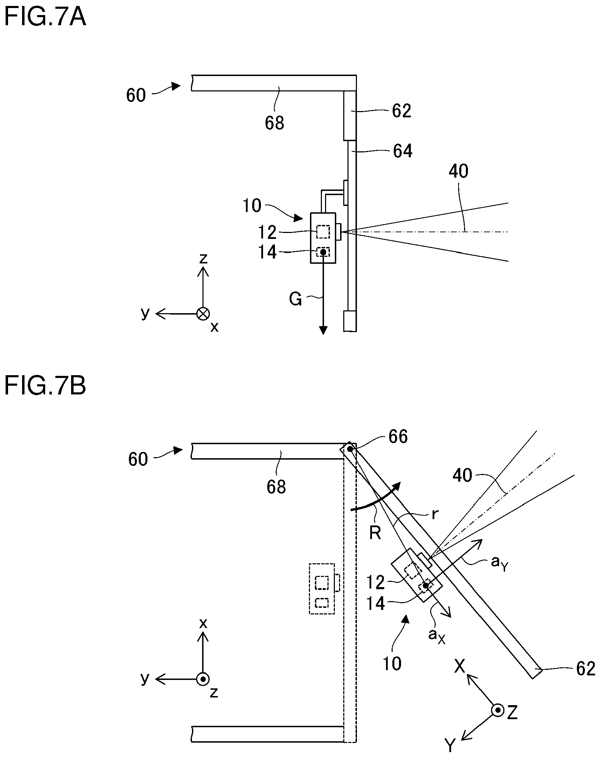

Figs. 7A and 7B schematically show a further vehicle 60 on which the drive recorder 10 according to the embodiment is mounted. Fig. 7A is a side view showing the vehicle 60 seen from the side, and Fig. 7B is a top view showing the vehicle 60 seen from above. The vehicle 60 in Figs. 7A and 7B differs from that of the embodiment described above in that a back door 62 opens sideways, and the axis of rotation of the back door 62 is the vertical direction (z axis) of the vehicle 60. The drive recorder 10 is mounted on the back door 62 that opens sideways and captures an image behind the vehicle 60 across a back window 64. A hinge 66 for rotating the back door 62 is provided in the side part of the vehicle main body 68. This embodiment will be described, highlighting the difference from the above-described embodiment.

Fig. 7B shows that the back door 62 that opens sideways is opened as indicated by the arrow R and shows the position of the back door 62 in the closed state by broken lines. Since the axis of rotation of the back door 62 is the z axis, the coordinate system with reference to the drive recorder 10 is rotated around the z axis with respect to the coordinate system with reference to the vehicle 60. As a result, the z axis of the first coordinate system with reference to the vehicle 60 remains identical to the Z axis of the second coordinate system with reference to the drive recorder 10, and the direction in which the gravitational acceleration G is detected remains unchanged in the second coordinate system, regardless of whether the back door 62 is open or closed. Consequently, it is not possible to detect the attitude of the back door 62 based on the direction of gravitational acceleration in the stationary state in the case the back door 62 opens sideways.

In this regard, it is detected that the back door 62 is open or closed by detecting a rotary motion that occurs when the back door 62 is opened or closed, based on at least one detected value of the sensor 14. When the back door 62 is opened or closed, the drive recorder 10 makes a circular motion around the hinge 66 as an axis of rotation such that the radius of rotation r is constant. In this case, the direction of movement of the drive recorder 10 is a direction along the Y axis so that the speed v(t) of the rotary motion of the drive recorder 10 is comprises of a component in the Y axis direction. Therefore, the speed v(t) can be calculated by temporally integrating the acceleration a_{Y} in the Y axis so that v(t) = ∫a_{Y}dt. Further, the centrifugal force F of the circular motion is a direction along the X axis so is proportional to the acceleration ax in the X axis so that F = max, where m denotes a mass. Because the centrifugal force F of the circular motion is given by F = mv²/r, by using the speed v(t) and the radius of rotation r, the acceleration ax in the X axis is given by a_{X} = v(t)²/r. Using the relationship v(t) = ∫a_{Y}dt, the radius of rotation is given by r = {∫a_{Y}dt}²/a_{X} so that the radius of rotation r can be calculated from the acceleration a_{X}, a_{Y} in the X axis and the Y axis. When the radius of rotation r calculated matches the radius of rotation corresponding to the position where the drive recorder 10 is mounted, it is presumed that the drive recorder 10 is making a circular motion associated with an action to open or close the back door 62. The magnitude of the radius of rotation r depends on the position where the drive recorder 10 is mounted and the size of the back door 62 and is about 0.5 m - 1.5 m. For this reason, the radius of rotation r can be distinguished with significance level from the radius of rotation of the vehicle 60 running on a curve or an intersection (e.g., equal to or larger than 10 m).

In this embodiment, the open or closed door detection unit 24 detects that the back door 62, on which the drive recorder 10 is mounted, is open or closed, based on the detected value (e.g., the detected value of acceleration) acquired by the detected value acquisition unit 20. The open or closed door detection unit 24 determines whether the back door 62 is in a stationary state or a dynamic state based on the sensor detected value (e.g., the detected value of acceleration). When the back door 62 is in a dynamic state, the open or closed door detection unit 24 calculates the radius of rotation r from the acceleration a_{X}, a_{Y} in the X axis and the Y axis. The open or closed door detection unit 24 determines that the back door 62 is in the open state when the radius of rotation r calculated is within a predetermined range. The open or closed door detection unit 24 determines that the back door 62 is not in the open state when the radius of rotation r calculated is outside the predetermined range.

The open or closed door detection unit 24 updates the open state flag based on the result of determination as to whether the back door 62 is in the open state. When the open or closed door detection unit 24 determines that the back door 62 is in the open state based on the radius of rotation r calculated, the open or closed door detection unit 24 sets the open state flag to ON. When the open or closed door detection unit 24 determines that the back door 62 is not in the open state based on the radius of rotation r calculated, the open or closed door detection unit 24 sets the open state flag to OFF. When the back door 62 is in a stationary state, the open or closed door detection unit 24 sets the open state flag to OFF.

The setting storage unit 30 stores the setting value used by the open or closed door detection unit 24 to detect that the back door 62 is open or closed. The setting storage unit 30 stores, for example, the setting value of the radius of rotation r of the drive recorder 10 mounted on the back door 62. The setting value of the radius of rotation r is stored in the setting storage unit 30 by mounting the drive recorder 10 on the back door 62 and then opening and closing the back door 62 in the initial setting operation of the drive recorder 10. For example, the radius of rotation r is calculated based on the detected value of the sensor 14 detected when the initial setting operation is performed and is stored in the setting storage unit 30. The drive recorder 10 may be configured such that the user can directly input a setting value of the radius of rotation r.

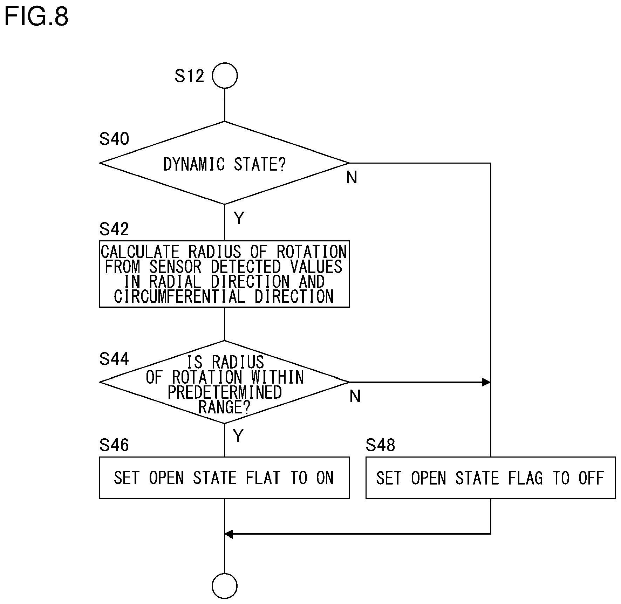

Fig. 8 is a flowchart showing the detail of the process of Fig. 5 for updating the open state flag (S12) and shows a process performed when the drive recorder 10 is mounted on the back door 62 that opens sideways. The open or closed door detection unit 24 determines whether the back door 62 is in a dynamic state based on the detected value acquired (e.g., the value of acceleration). When the open or closed door detection unit 24 determines that the back door 62 is in a dynamic state (Y in S40), the open or closed door detection unit 24 calculates the radius of rotation r of the circular motion from the sensor detected values (e.g., the values of acceleration) in the radial direction (Y axis) and the circumferential direction (X axis) (S42). When the radius of rotation r calculated is within a predetermined range (Y in S44), the open or closed door detection unit 24 sets the open state flag to ON (S46). When the radius of rotation r calculated is outside the predetermined range (N in S44), the open or closed door detection unit 24 sets the open state flag to OFF (S48). When the open or closed door detection unit 24 determines that the back door 62 is in a stationary state in S40 (N in S40), the open or closed door detection unit 24 sets the open state flag to OFF (S48).

The embodiment makes it possible to prevent an event from being detected when an abnormality or an impact occurs as the back door 62 is opened or closed, by detecting that the back door 62 is open or closed in the rear drive recorder 10 mounted on the back door 62 that opens sideways. The embodiment also ensures that event data is recorded in response to the occurrence of an abnormality or an impact due to a collision or an accident, by enabling detection of an event when the back door 62 is not detected to be open or closed.

The invention has been explained with reference to the embodiments described above, but the invention is not limited to the embodiments described above, and appropriate combinations or replacements of the features shown in the examples presented are also encompassed by the present invention.

In the embodiments described above, the drive recorder 10 may be compatible only with the back door 52 that opens vertically or only with the back door 62 that opens sideways. The drive recorder 10 may be compatible with both the back door 52 that opens vertically and the back door 62 that opens sideways. In this case, the setting storage unit 30 may store setting information indicating whether the back door on which the drive recorder 10 is mounted opens vertically or sideways.

In the embodiments described above, the drive recorder 10 may be provided with a function of automatically detecting whether the back door on which the drive recorder 10 is mounted opens vertically or sideways. In other words, the drive recorder 10 may automatically detect the orientation of the axis of rotation of the back door on which the drive recorder 10 is mounted. For example, the open or closed door detection unit 24 may detect that the back door opens vertically (the axis of rotation is the X axis) when the open or closed door detection unit 24 can detect, in the stationary state, that the back door is in the open state. Further, the open or closed door detection unit 24 may detect that the back door opens sideways (the axis of rotation if the Z axis) when the open or closed door detection unit 24 can detect, in a dynamic state, that the back door is open or closed based on the radius of rotation r.

In the embodiments described above, the drive recorder 10 may be available for use as the front drive recorder. In this case, the setting information for causing the drive recorder 10 to function as a front drive recorder may be stored in the setting storage unit 30. When the drive recorder 10 is caused to function as a front drive recorder, the operation of the open or closed door detection unit 24 may be turned off, and the open state flag may be set to OFF continuously. Further, when the drive recorder 10 is mounted on the back door for use, the setting storage unit 30 may store the setting information for causing the drive recorder 10 to function as a rear drive recorder. When the drive recorder 10 is caused to function as a rear drive recorder, the operation of the open or closed door detection unit 24 may be turned on, and ON/OFF of the open state flag may be updated based on the detection of the back door being open or closed.

When the sensor 14 includes a gyro sensor in the embodiments described above, the open or closed door detection unit 24 may determine a dynamic state and a stationary state of the back door 52 or determine the open state and the closed state of the back door 52, based on the angular speed detected by the gyro sensor. When the sensor 14 includes a door sensor, the open or closed door detection unit 24 may determine the open state or the closed state of the back door 52 based on the detected value of the door sensor.

### [INDUSTRIAL APPLICABILITY]

According to the present invention, unnecessary event data is prevented from being recorded when the back door is opened or closed.

### [REFERENCE SIGNS LIST]

10 ... drive recorder, 12 ... camera, 14 ... acceleration sensor, 16 ... controller, 18 ... image acquisition unit, 20 ... detected value acquisition unit, 22 ... abnormality detection unit, 24 ... open or closed door detection unit, 26 ... event detection unit, 28 ... recording control unit, 30 ... setting storage unit, 50, 60 ... vehicle, 52, 62 ... backdoor

## Claims

1. A drive recorder mounted on a back door of a vehicle, comprising:
an abnormality detection unit that detects an abnormality related to the vehicle;
an open or closed door detection unit that detects that the back door is open or closed;
an event detection unit that detects an event based on a result of detection by the abnormality detection unit and a result of detection by the open or closed door detection unit; and
a recording control unit that records event data in response to a detection of the event.

2. The drive recorder according to claim 1, wherein the open or closed door detection unit determines a stationary state or a dynamic state based on a detected value of a sensor provided in the drive recorder, detects an attitude in the stationary state based on the detected value of the sensor, and detects that the back door is open or closed based on the attitude in the stationary state.

3. The drive recorder according to claim 1, wherein the open or closed door detection unit determines a stationary state or a dynamic state based on a detected value of a sensor provided in the drive recorder, and detects that the back door is open or closed based on the detected values of the sensor in a radial direction and a circumferential direction in the dynamic state, wherein the radial direction and the circumferential direction are perpendicular to an axis of rotation around which the back door is opened or closed.

4. The drive recorder according to any one of claims 1 through 3, wherein
the open or closed door detection unit detects an orientation of an axis of rotation of the back door based on a detected value of a sensor provided in the drive recorder.

5. A data recording method comprising:
detecting an abnormality related to a vehicle;
detecting that a back door of the vehicle is open or closed;
detecting an event based on a result of detection of an abnormality and a result of detection of the back door being open or closed; and
recording event data in response to a detection of the event.

6. A program comprising computer-implemented modules including:
a module that detects an abnormality related to a vehicle;
a module that detects that a back door of the vehicle is open or closed;
a module that detects an event based on a result of detection of an abnormality and a result of detection of the back door being open or closed; and
a module that records event data in response to a detection of the event.
